Europäisches Patentamt

(19) European Patent Office

Office européen des brevets

(11) Veröffentlichungsnummer : **0 052 223**
**B1**

(12) **EUROPÄISCHE PATENTSCHRIFT**

(45) Veröffentlichungstag der Patentschrift :
08.02.84

(51) Int. Cl.³ : **C 03 B 9/38, C 03 B 9/353**

(21) Anmeldenummer : 81108062.1

(22) Anmeldetag : 08.10.81

(54) **Kühlvorrichtung für ein Formwerkzeug.**

(30) Priorität : 25.10.80 DE 3040311

(43) Veröffentlichungstag der Anmeldung :
26.05.82 Patentblatt 82/21

(45) Bekanntmachung des Hinweises auf die Patenterteilung : 08.02.84 Patentblatt 84/06

(84) Benannte Vertragsstaaten :
AT BE CH FR GB IT LI LU NL SE

(56) Entgegenhaltungen :
FR-A- 2 317 237
US-A- 3 586 491

(73) Patentinhaber : HERMANN HEYE
Allee
D-3063 Obernkirchen (DE)

(72) Erfinder : Schneider, Wilhelm
Feldstrasse 22
D-3262 Auetal 2 (DE)

(74) Vertreter : Kosel, Peter, Dipl.-Ing. et al
Patentanwälte Dipl.-Ing. Horst Röse Dipl.-Ing. Peter
Kosel Postfach 129 Odastrasse 4a
D-3353 Bad Gandersheim (DE)

Kühlvorrichtung für ein Formwerkzeug

Die Erfindung betrifft eine Kühlvorrichtung für ein durch ein Druck-Fluid, insbesondere Luft, kühlbares Formwerkzeug einer Maschine zur Verarbeitung thermoplastischer Stoffe, insbesondere schmelzflüssigen Glases, mit wenigstens einem raumfesten Zuführkanal für das Fluid und mit einem jeden Zuführkanal mit einer Fluidverteilvorrichtung für das relativ zu dem Zuführkanal um eine erste Schwenkachse schwenkbare formwerkzeugverbindenden, relativ zu dem Zuführkanal und relativ zu der Fluidverteilvorrichtung schwenkbaren, geteilten Verbindungskanal.

Bei einer bekannten Kühlvorrichtung dieser Art (Prospekt « Mould Holders with Internal Cooling » 191-6950, Sales Bulletin No. 7 der Firma Emhart Zürich SA, Postfach, CH-8034 Zürich, Schweiz) ist der Verbindungskanal als Teleskoprohr ausgebildet, dessen beide freie Enden jeweils mit einem beidseitig offenen Teil einer Hohlkugel verbunden sind. Die Hohlkugelteile sind jeweils in einer Kugelpfanne des Zuführkanals und der Fluidverteilvorrichtung schwenkbar gelagert. Nachteilig ist dabei der durch die Kugelgelenke bedingte verhältnismäßig kleine zulässige Schwenkwinkel der Fluidverteilvorrichtung und damit des Formwerkzeugs. Dadurch kann eine bestimmte axiale Mindestlänge der Formwerkzeuge nicht unterschritten werden. Ferner läßt sich bei Formwerkzeugen von verhältnismäßig geringer axialer Länge das Fluid schließlich nur im axialen Endbereich des Formwerkzeugs im größtmöglichen Abstand von dem Zuführkanal in die Fluidverteilvorrichtung einspeisen.

Der Erfindung liegt die Aufgabe zugrunde, den für das Formwerkzeug zulässigen Schwenkwinkel unabhängig von der axialen Länge des Formwerkzeugs zu vergrößern und eine Fluideinspeisung in die Fluidverteilvorrichtung in jeder beliebigen axialen Ebene des Formwerkzeugs zu ermöglichen.

Diese Aufgabe ist durch die im Kennzeichnungsteil des Anspruchs 1 angegebenen Merkmale gelöst. Den Gelenkkanalteilen kann auf einfache Weise jede gewünschte Erstreckung in der Schwenkrichtung gegeben werden. Die Schwenkbahnen der Gelenkkanalteile können ferner je nach dem verfügbaren Raumangebot in der Maschine günstig gelegt werden.

Das Formwerkzeug kann sowohl eine Einfachform als auch eine Mehrfachform sein. Der Zuführkanal kann maschinenfest verlegt oder Teil einer in der Fabrikhalle verlegten Gebläseleitung sein. Bei der ersten Schwenkachse, um die die Teile des Formwerkzeugs schwenken, handelt es sich vorzugsweise um eine Scharniersäule, an der die Formwerkzeugteile tragende Zangenarme schwenkbar gelagert sind.

Mit den Merkmalen des Anspruchs 2 ergeben sich besonders günstige Bewegungsverhältnisse für die Gelenkkanalteile bei nur geringem Raumbedarf innerhalb der Maschine. Auf einfache Weise werden die Gelenkkanalteile durch die vierte Schwenkachse schwenkend angetrieben.

Die Spaltdichtungen gemäß Anspruch 3 sind einfach und betriebssicher und führen insbesondere bei dem nur erforderlichen verhältnismäßig geringen Gebläsedruck des Fluids zu nur unwesentlichen Fluidleckverlusten.

Die Verlängerungsstücke gemäß Anspruch 4 gestatten eine Anpassung der Kühlvorrichtung an unterschiedlichen Formwerkzeuge mit geringstmöglichem Aufwand. Insbesondere können bei einem Wechsel des Formwerkzeugtyps die Gelenkkanalteile unverändert bleiben.

Dadurch sind die Umrüstzeiten erheblich verkürzt.

Der gleiche Vorteil ergibt sich mit den Merkmalen des Anspruchs 5, wenn aus konstruktiven oder betrieblichen Gründen die Verlängerung leichter stromabwärts von den Gelenkkanalteilen vorgenommen werden kann.

Eine leichte und zwängungsfreie Schwenkbewegung der Gelenkkanalteile ist durch die Merkmale des Anspruchs 6 gewährleistet.

Besonders günstige Bewegungsverhältnisse ergeben sich mit den Merkmalen des Anspruchs 7 und/oder 8.

Bei besonderen räumlichen und/oder betrieblichen Verhältnissen in der Maschine ergeben sich gleiche Vorteile mit den Merkmalen der Ansprüche 9 und/oder 10.

Die Merkmale des Anspruchs 11 gestatten dann eine leichte und raumsparende Ausbildung des ersten Gelenkkanalteils, wenn die zweite Schwenkachse parallel zu, also im Abstand von der Längsachse des Zuführkanals angeordnet ist.

Wenn dieser Achsabstand nicht besteht, läßt sich das erste Gelenkkanalteil mit Vorteil gemäß Anspruch 12 ausbilden.

Eine leichte, einfache und raumsparende Ausgestaltung des zweiten Gelenkkanalteils erhält man nach der Vorschrift des Anspruchs 13.

Die Erfindung wird nachfolgend anhand der in den Zeichnungen dargestellten Ausführungsbeispiele näher erläutert.

Es zeigen :

Figur 1 die Draufsicht auf einen Teil einer Glasformmaschine mit Kühlvorrichtung, teilweise im Schnitt,

Figur 2 die Schnittansicht nach Linie II-II in Fig. 1,

Figur 3 die Schnittansicht nach Linie III-III in Fig. 1,

Figur 4 die Draufsicht auf ein erstes Gelenkkanalteil der Kühlvorrichtung gemäß den vorangehenden Figuren,

Figur 5 die Schnittansicht nach Linie V-V in Fig. 4,

Figur 6 die Schnittansicht nach Linie VI-VI in Fig. 4,

Figur 7 die Ansicht von unten gemäß Linie VII-VII in Fig. 5,

Figur 8 die Draufsicht auf ein zweites Gelenkkanalteil der Kühlvorrichtung gemäß den Figuren 1 bis 3,

Figur 9 die Schnittansicht nach Linie IX-IX in Fig. 8,

Figur 10 die Stirnansicht gemäß Linie X-X in Fig. 8,

Figur 11 die Draufsicht auf einen anderen Teil der Glasformmaschine, teilweise im Schnitt,

Figur 12 die Schnittansicht nach Linie XII-XII in Fig. 11,

Figur 13 eine der Fig. 12 entsprechende Schnittansicht durch eine andere Ausführungsform,

Figur 14 eine der Fig. 12 entsprechende Schnittansicht durch eine weitere Ausführungsform,

Figur 15 die Schnittansicht gemäß Linie XV-XV in Fig. 11 durch ein erstes Gelenkkanalteil einer dortigen Kühlvorrichtung,

Figur 16 die Stirnansicht gemäß Linie XVI-XVI in Fig. 15,

Figur 17 den Längsschnitt gemäß Linie XVII-XVII in Fig. 11 durch ein zweites Gelenkkanalteil,

Figur 18 die Stirnansicht gemäß Linie XVIII-XVIII in Fig. 17,

Figur 19 die Ansicht von unten gemäß Linie XIX-XIX in Fig. 17 und

Figur 20 einen teilweisen Längsschnitt durch eine andere Ausführungsform der Maschine und der Kühlvorrichtung.

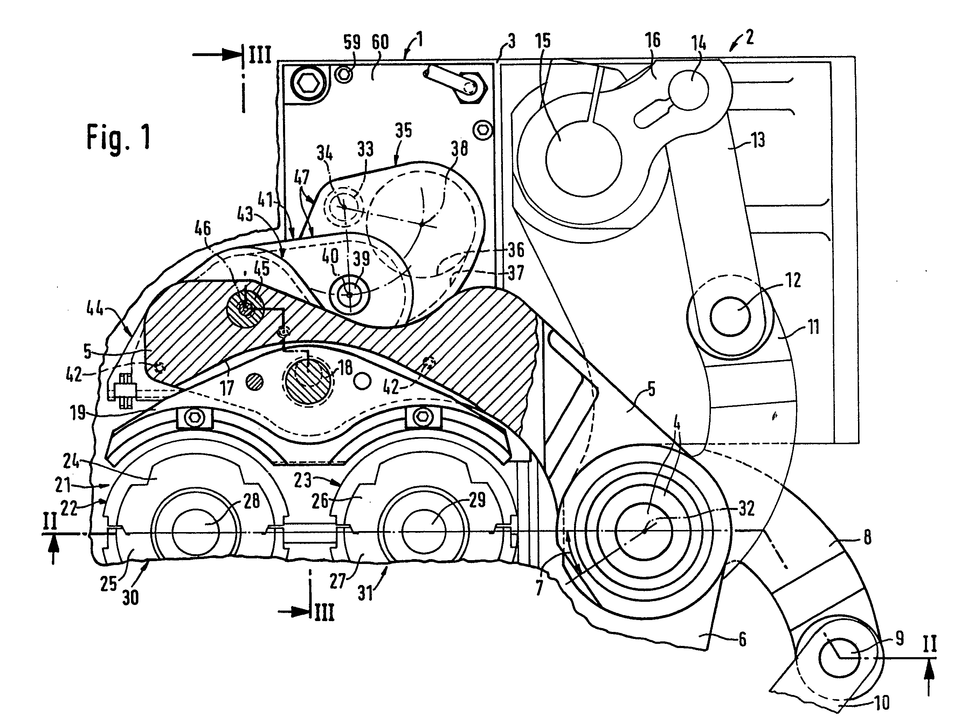

Fig. 1 zeigt eine Vorformseite 1 einer Station 2 einer sogenannten I. S.-Glasformmaschine. Mit der Station 2 werden aus einem nicht gezeichneten Tropfenspeiser kommende Tropfen schmelz- bzw. zähflüssigen Glases im Preß-Blas-Verfahren zu Hohlglasgegenständen geformt.

Mit einem Maschinengestell 3 der Station 2 ist eine senkrecht stehende Scharniersäule 4 fest verbunden, an der Vorformzangenhälften 5 und 6 schwenkbar gelagert sind. In Fig. 1 ist die Vorformzangenhälfte 5 in ihrer geschlossenen und die Vorformzangenhälfte 6 in ihrer um einen Winkel 7 am weitesten geöffneten Stellung gezeichnet. An der Vorformzangenhälfte 5 ist ein rückwärtiger Arm 8 befestigt, der über einen Bolzen 9 an einer Lasche 10 angelenkt ist. In ähnlicher Weise erstreckt sich von der Vorformzangenhälfte 6 ein rückwärtiger Arm 11, der über einen Bolzen 12 mit einer Lasche 13 gekuppelt ist, die an einem Kurbelzapfen 14 einer an einer Antriebswelle 15 befestigten Kurbel 16 angelenkt ist. In ähnlicher Weise ist die Lasche 10 antreibbar.

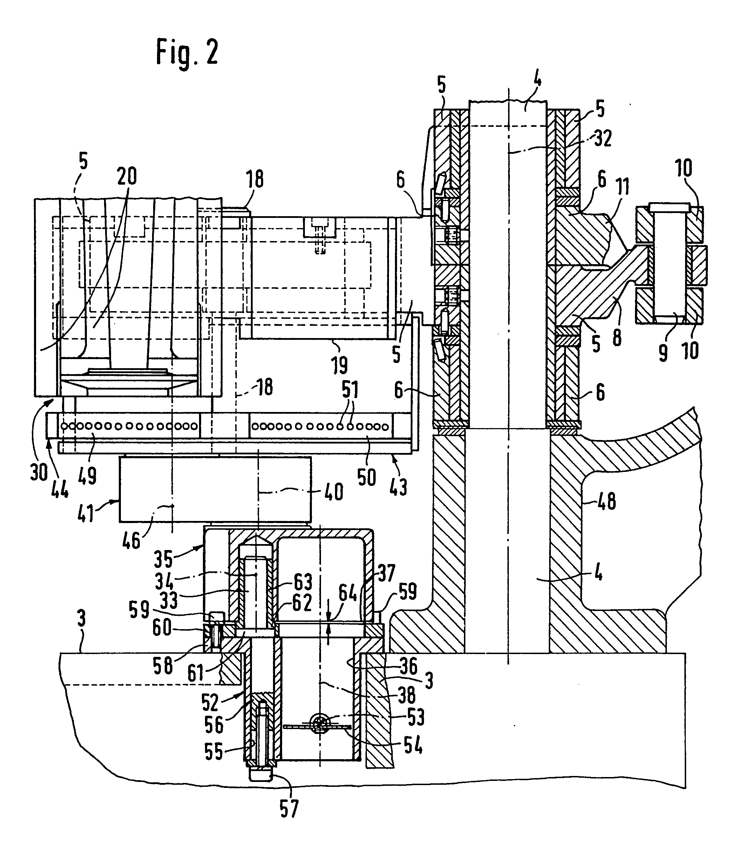

In einer seitlichen Ausnehmung 17 der Vorformzangenhälfte 5 ist an einem Wippenbolzen 18 eine Wippe 19 schwenkbar gelagert, in die zwei in Fig. 1 nicht gezeichnete Vorformhälften (vgl. 20 in Fig. 2) eines als Doppelform ausgebildeten Formwerkzeugs 21 einhängbar sind. Das Formwerkzeug 21 weist außerdem zwei geteilte Mündungswerkzeuge 22 und 23 auf, die in an sich bekannter Weise unabhängig von den Vorformzangenhälften 5,6 bewegbar an der Station 2 gelagert sind. Das Mündungswerkzeug 22 weist Mündungswerkzeughälften 24 und 25 und das Mündungswerkzeug 23 Mündungswerkzeughälften 26 und 27 auf.

Die Vorformzangenhälfte 6 ist in der gleichen Weise ausgebildet und ausgestattet wie die Vorformzangenhälfte 5 und trägt nicht dargestellte, zu den Vorformhälften 20 komplementäre Vorformhälften. In der geschlossenen Stellung der Vorformzangenhälften 5,6 übergreifen untere Bereiche der Vorformhälften, z. B. 20, obere Bereiche der geschlossenen Mündungswerkzeuge 22, 23.

Preßstempel 28 und 29 dringen von unten zentral durch die Mündungswerkzeuge 22, 23 hindurch in das Innere der geschlossenen Vorformhälften, z. B. 20, und formen aus dem zuvor in die Vorformen 30 und 31 eingebrachten Glasposten jeweils ein Külbel.

Die Scharniersäule 4 bildet eine erste Schwenkachse mit einer Längsachse 32. Um eine zu der ersten Schwenkachse 4 parallele, relativ zu dem Maschinengestell 3 feste zweite Schwenkachse 33 mit einer Längsachse 34 ist ein erstes Gelenkkanalteil 35 schwenkbar. Das erste Gelenkkanalteil 35 weist eine sich auf einem Kreisringstück um die zweite Schwenkachse 33 erstreckende, ständig mit einem maschinenfesten Zuführkanal 36 verbundene Einlaßöffnung 37 für ein Fluid, z. B. Gebläseluft, zur Kühlung des Formwerkzeugs 21 auf. Der Zuführkanal 36 besitzt eine Längsachse 38, die parallel zu der Längsachse 34 verläuft.

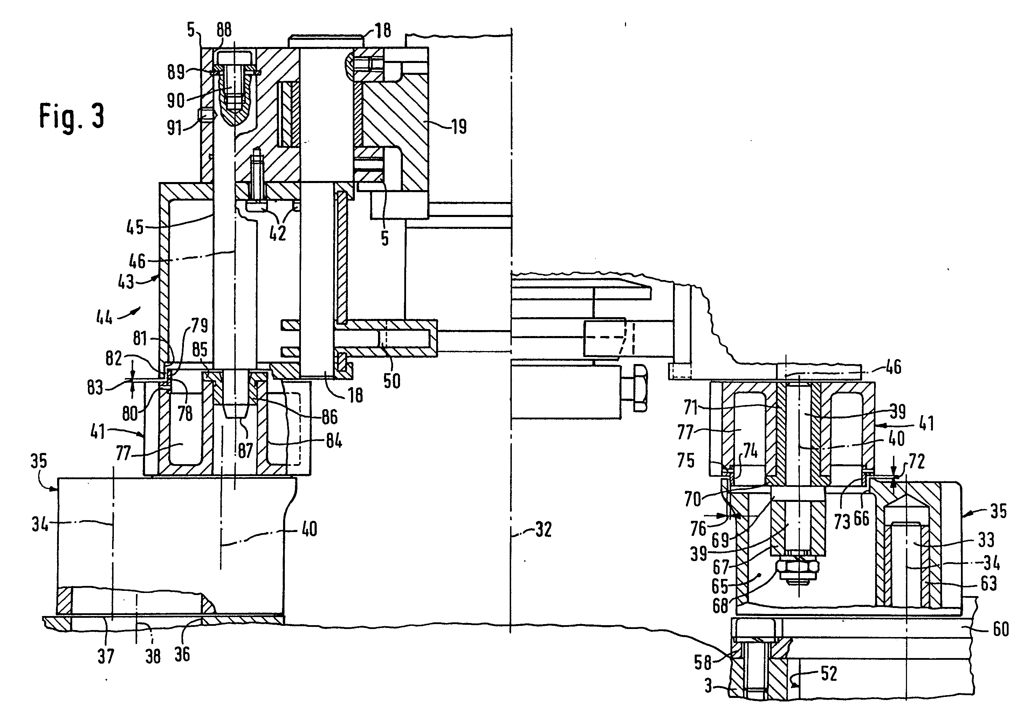

An dem ersten Gelenkkanalteil 35 ist in der im einzelnen aus Fig. 3 ersichtlichen Weise eine dritte Schwenkachse 39 mit einer zu der Längsachse 34 parallelen Längsachse 40 befestigt.

Um die dritte Schwenkachse 39 ist ein zweites Gelenkkanalteil 41 schwenkbar. Das zweite Gelenkkanalteil 41 übernimmt das Fluid von dem ersten Gelenkkanalteil 35 und leitet es weiter in einen mit Schrauben 42 an der Vorformzangenhälfte 5 befestigten Fluidverteilerkasten 43 einer Fluidverteilvorrichtung 44.

Das zweite Gelenkkanalteil 41 ist um eine vierte Schwenkachse 45 mit einer zu der Längsachse 40 parallelen Längsachse 46 schwenkbar. Die vierte Schwenkachse 45 ist (vgl. Fig. 3) an der Vorformzangenhälfte 5 befestigt und treibt daher während der Öffnungs- und Schließbewegung der Vorformzangenhälfte 5 das zweite Gelenkkanalteil 41 mit der Längsachse 46 auf einem Kreisbogen um die Längsachse 32.

Das erste Gelenkkanalteil 35 und das zweite Gelenkkanalteil 41 bilden einen schwenkbaren Verbindungskanal 47 zwischen dem Zuführkanal 36 und der Fluidverteilvorrichtung 44.

Die Vorformzangenhälfte 6 wird in der gleichen Weise wie die Vorformzangenhälfte 5 mit Fluid versorgt.

In den Zeichnungen sind jeweils gleiche Teile mit gleichen Bezugszahlen versehen.

Gemäß Fig. 2 ist die die erste Schwenkachse 4 bildende Scharniersäule unten in einem Halter 48 festgelegt, der mit dem Maschinengestell 3 fest verschraubt ist. In die Vorformzangenhälfte 5 ist links in Fig. 2 die Vorformhälfte 20 eingehängt, rechts jedoch nicht, um Einzelheiten der Wippe 19 und der Vorformzangenhälfte 5 zeigen zu können. In Fig. 2 sind die Mündungswerkzeuge 22, 23 nicht gezeigt. Diese Mündungswerkzeuge 22, 23 werden durch Düsensegmente 49 und 50 mit Düsenbohrungen 51 mit Fluid frei radial angeblasen. Anzahl, Größe und Verteilung der Düsenbohrungen 51 können zur Erzielung einer optimalen Kühlung der Mündungswerkzeuge 22, 23 optimal angepaßt werden.

Die Düsensegmente 49, 50 stellen Fluidauslässe des Fluidverteilerkastens 43 dar.

In das Maschinengestell 3 ist für jede Vorformzangenhälfte 5, 6 ein den Zuführkanal 36 bildender Einsatz 52 eingesetzt. In dem Zuführkanal 36 befindet sich eine um eine Achse 53 schwenkbare Ventilklappe 54. Eine Bohrung 55 des Einsatzes 52 nimmt einen unteren Fortsatz 56 der zweiten Schwenkachse 33 auf, der darin durch eine Schraube 57 festgelegt ist.

Mit einem oberen Flansch 58 des Einsatzes 52 ist durch Schrauben 59 eine Zwischenplatte 60 verschraubt, die in einer Bohrung sowohl einen Bund 61 der zweiten Schwenkachse 33 als auch einen Flansch 62 einer die zweite Schwenkachse 33 lagernden Buchse 63 aufnimmt.

Der Flansch 62 ragt nach oben über die Oberfläche der Zwischenplatte 60 hinaus und trägt das erste Gelenkkanalteil 35 derart, daß zwischen der Oberseite der Zwischenplatte 60 und einer Unterseite des ersten Gelenkkanalteils 35 ein verhältnismäßig kleiner Spalt 64 entsteht. Der Fluidverlust durch den Spalt 64 ist insbesondere bei verhältnismäßig geringem Gebläsedruck des Fluids vernachlässigbar gering.

Gemäß Fig. 3, rechte Hälfte steht die Einlaßöffnung 37 des ersten Gelenkkanalteils 35 über einen Innenraum 65 in ständiger Verbindung mit einer mit der dritten Schwenkachse 39 konzentrischen Auslaßöffnung 66 des ersten Gelenkkanalteils 35. Durch eine Bohrung eines Steges 67 des ersten Gelenkkanalteils 35 ist ein unteres Ende der dritten Schwenkachse 39 hindurchgeführt und darin durch eine selbstsichernde Mutter 68 festgelegt. Dabei liegt an einer Oberseite des Steges 67 ein Bund 69 der dritten Schwenkachse 39 auf. Eine Oberseite des Bundes 69 trägt einen Flansch 70 einer einen oberen Teil der dritten Schwenkachse 39 lagernden Buchse 71.

Auf einer Oberseite des Flansches 70 stützt sich das zweite Gelenkkanalteil 41 so ab, daß ringsum ein verhältnismäßig kleiner Spalt 72 zwischen einer Oberseite des ersten Gelenkkanalteils 35 und einer Unterseite des zweiten Gelenkkanalteils 41 besteht. In die Unterseite des zweiten Gelenkkanalteils 41 ist ein eine Einlaßöffnung 73 des zweiten Gelenkkanalteils 41 definierendes, mit der dritten Schwenkachse 39 koaxiales Rohrstück 74 eingesetzt und darin mit Stiften 75 gesichert. Das Rohrstück 74 ragt nach unten in die Auslaßöffnung 66 hinein und bildet mit dieser einen umlaufenden, verhältnismäßig kleinen Spalt 76.

Die Einlaßöffnung 73 steht über einen Innenraum 77 in ständiger Verbindung mit einer durch ein Rohrstück 78 definierten, mit der vierten Schwenkachse 45 koaxialen Auslaßöffnung 79. Das Rohrstück 78 ist durch Stifte 80 gegenüber dem zweiten Gelenkkanalteil 41 gesichert und ragt in eine mit der vierten Schwenkachse 45 koaxiale Einlaßöffnung 81 des Fluidverteilkastens 43 derart hinein, daß dazwischen ein verhältnismäßig kleiner ringförmiger Spalt 82 besteht. Auch zwischen einer Oberseite des zweiten Gelenkkanalteils 41 und einer Unterseite des Fluidverteilerkastens 43 besteht ein kleiner Spalt 83.

Ein hohlzylindrischer Steg 84 des zweiten Gelenkkanalteils 41 trägt oben einen Flansch 85 einer Buchse 86, in die ein Antriebsfortsatz 87 der vierten Schwenkachse 45 eingreift.

Die vierte Schwenkachse 45 durchdringt den Fluidverteilerkasten 43 und ragt in eine Bohrung 88 der Vorformzangenhälfte 5,6 hinein. In der Bohrung 88 ist die vierte Schwenkachse 45 in axialer Richtung durch einen Sprengring 89 und eine Schraube 90 und in Umfangsrichtung durch eine Madenschraube 91 festgelegt.

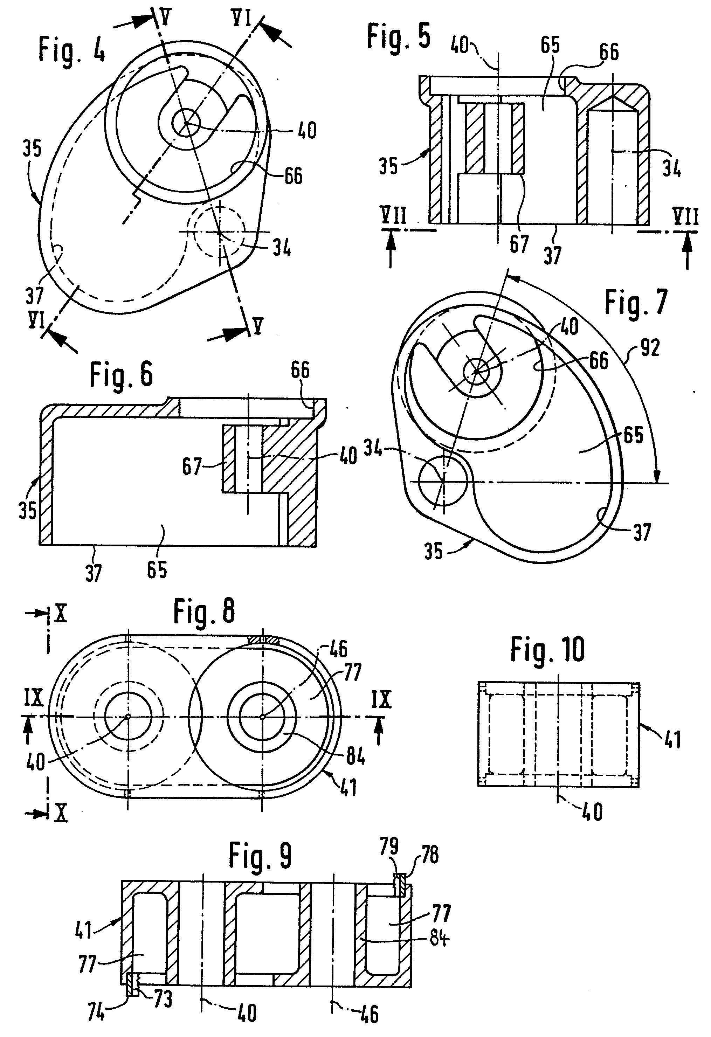

In den Fig. 4 bis 7 sind weitere Einzelheiten des ersten Gelenkkanalteils 35 dargestellt. Fig. 7 zeigt zusätzlich den maximalen Schwenkwinkel 92 des ersten Gelenkkanalteils 35 um die Längsachse 34.

In den Fig. 8 bis 10 sind weitere Einzelheiten des zweiten Gelenkkanalteils 41 dargestellt.

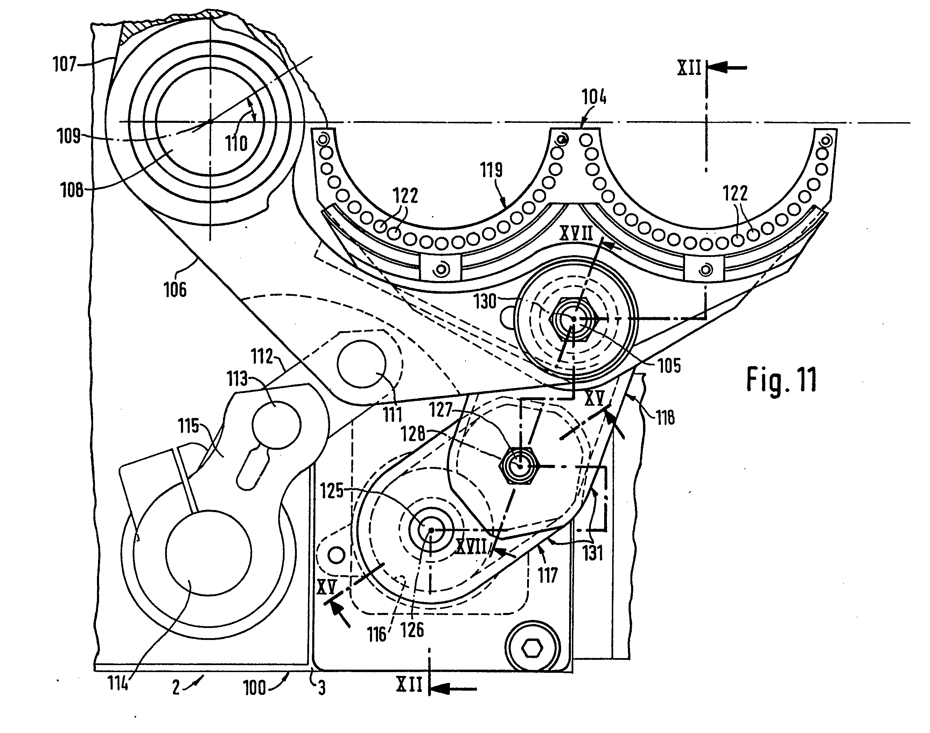

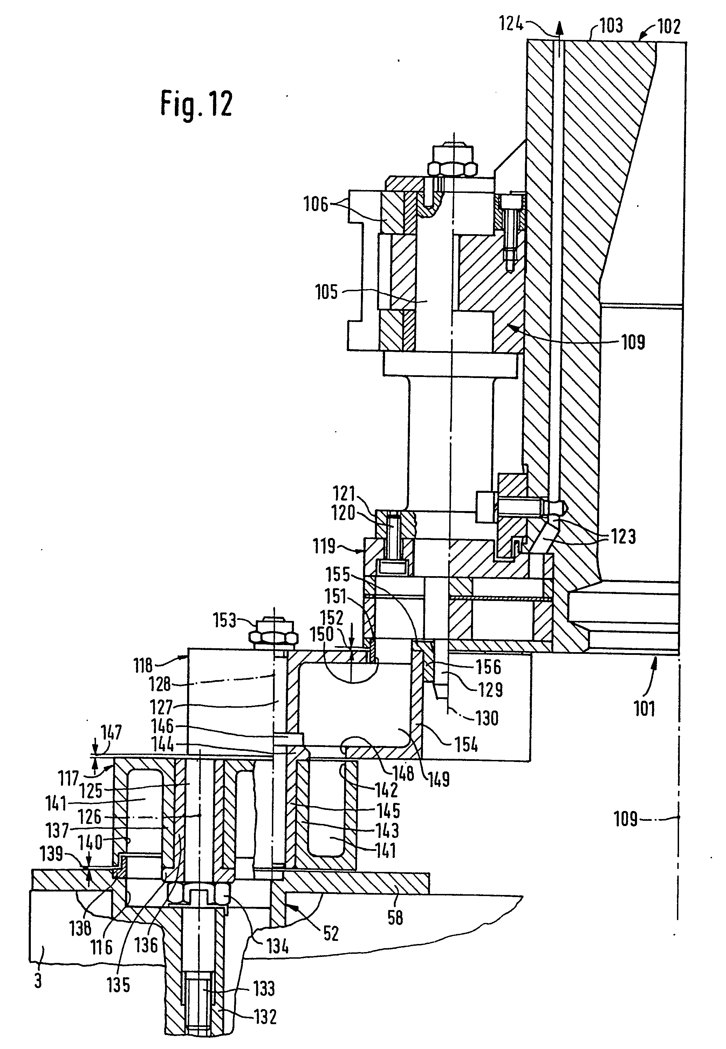

Fig. 11 zeigt einen Teil einer Fertigformseite 100 der Station 2. In der Fertigformseite 100 werden die in der Vorformseite (Fig. 1) gepreßten Külbel zu fertigen Hohlglasgegenständen in an sich bekannter Weise ausgeblasen. Dies geschieht in einem Formwerkzeug 101 (Fig. 12, 13 und 20), das wegen des gewählten Doppelformbetriebs jeweils zwei Fertigformen 102 aufweist. Jede Fertigform 102 ist mit Fertigformhälften 103 ausgestattet, die in Abhängigkeit von dem herzustellenden Hohlglasgegenstand unterschiedliche axiale Längen aufweisen können.

Jede Fertigformhälfte 103 kann in eine Wippe 104 eingehängt werden, die an einem Wippenbolzen 105 einer Fertigformzangenhälfte 106 und 107 schwenkbar angelenkt ist. Die Fertigformzangenhälften 106, 107 sind ihrerseits um eine eine erste Schwenkachse 108 mit einer Längsachse 109 definierende, an dem Maschinengestell 3 befestigte Scharniersäule schwenkbar gelagert. In Fig. 11 ist die Fertigformzangenhälfte 106 in der geschlossenen und ein Teil der Fertigformzangenhälfte 107 in ihrer um einen Winkel 110 voll geöffneten Stellung gezeichnet.

Jede Fertigformzangenhälfte 106, 107 ist über einen Bolzen 111 mit einer Lasche 112 verbunden, die an einem Kurbelzapfen 113 einer an einer Antriebswelle 114 befestigten Kurbel 115 angelenkt ist.

Fluid zur Kühlung des Formwerkzeugs 101 gelangt von einem an dem Maschinengestell 3 befestigten Zuführkanal 116 in ein erstes Gelenkkanalteil 117, von dort in ein zweites Gelenkkanalteil 118 und von dort in einen Fluidverteilerkasten 119, der mit Schrauben 120 an einem Bund 121 des Wippenbolzens 105 befestigt ist. Das Fluid verläßt den Fluidverteilerkasten 119 durch eine Anzahl Bohrungen 122 und tritt in damit fluchtende Bohrungen 123 in den zugehörigen Fertigformhälften 103 ein. Das Fluid verläßt schließlich die Bohrungen 123 am oberen Ende der Fertigformhälften 103 in Richtung eines Pfeiles 124.

Das erste Gelenkkanalteil 117 ist um eine zu der ersten Schwenkachse 108 parallele, relativ zu dem Maschinengestell 3 feste zweite Schwenkachse 125 mit einer Längsachse 126 schwenkbar. Das zweite Gelenkkanalteil 118 ist um eine zu der zweiten Schwenkachse 125 parallele, in dem ersten Gelenkkanalteil 117 gelagerte dritte Schwenkachse 127 mit einer Längsachse 128 schwenkbar. Das zweite Gelenkkanalteil 118 ist außerdem um eine zu der dritten Schwenkachse 127 parallele vierte Schwenkachse 129 (Fig. 12) mit einer Längsachse 130 schwenkbar, wobei die vierte Schwenkachse 129 einen unteren Fortsatz des Wippenbolzens 105 bildet und die Längsachse 130 mit der Längsachse des Wippenbolzens 105 zusammenfällt.

Das erste Gelenkkanalteil 117 und das zweite Gelenkkanalteil 118 bilden zusammen einen Verbindungskanal 131 für das Fluid.

In Fig. 12 ist in einen Steg 132 des Einsatzes 52 ein Gewindefortsatz 133 der zweiten Schwenkachse 125 mittels einer integrierten Mutter 134 eingeschraubt. Auf der Mutter 134 stützt sich ein Flansch 135 einer die zweite Schwenkachse 125 lagernden Buchse 136 ab. Auf einer Oberseite des Flansches 135 stützt sich ein hohlzylindrischer Steg 137 des ersten Gelenkkanalteils 117 derart ab, daß zwischen einem in den Flansch 58 eingesetzten Winkelring 138 und einer ringförmigen Einlaßöffnung 140 des ersten Gelenkkanalteils 117 ein verhältnismäßig geringer Spalt 139 verbleibt.

Die Einlaßöffnung 140 ist koaxial mit der zweiten Schwenkachse 125 und steht über einen Innenraum 141 mit einer ebenfalls kreisringförmigen Auslaßöffnung 142 des ersten Gelenkkanalteils 117 ständig in Verbindung. Die Auslaßöffnung ist koaxial mit der dritten Schwenkachse 127.

Auf einem hohlzylindrischen Steg 143 des ersten Gelenkkanalteils 117 stützt sich ein Flansch 144 einer die dritte Schwenkachse 127 lagernden Buchse 145 ab. Auf einer Oberseite des Flansches 144 ruht ein Bund 146 der dritten Schwenkachse 127 derart, daß zwischen einer Oberseite des ersten Gelenkkanalteils 117 und einer Unterseite des zweiten Gelenkkanalteils 118 ein kleiner Spalt 147 verbleibt.

Mit der Auslaßöffnung 142 fluchtet eine kreisringförmige Einlaßöffnung 148 des zweiten Gelenkkanalteils 118, die über einen Innenraum 149 ständig mit einer ringförmigen Auslaßöffnung 150 des zweiten Gelenkkanalteils 118 verbunden ist. Die Auslaßöffnung 150 ist koaxial mit der vierten Schwenkachse 129 und wird durch ein von unten in den Fluidverteilerkasten 119 eingesetztes Rohrstück 151 begrenzt. Zwischen dem Fluidverteilerkasten 119 und dem Rohrstück 151 einerseits und einem die Auslaßöffnung 150 umgebenden Rand des zweiten Gelenkkanalteils 118 andererseits besteht ein verhältnismäßig kleiner Spalt 152. Das zweite Gelenkkanalteil 118 wird mittels einer auf ein Gewindeende der dritten Schwenkachse 127 aufgeschraubten selbstsichernden Mutter 153 in Anlage an dem Bund 146 gehalten. An einem hohlzylindrischen Steg 154 des zweiten Gelenkkanalteils 118 stützt sich oben ein Flansch 155 einer an der vierten Schwenkachse 129 gelagerten Buchse 156 ab.

Gemäß Fig. 12 sind Fertigformhälften 103 mittlerer axialer Länge im Einsatz.

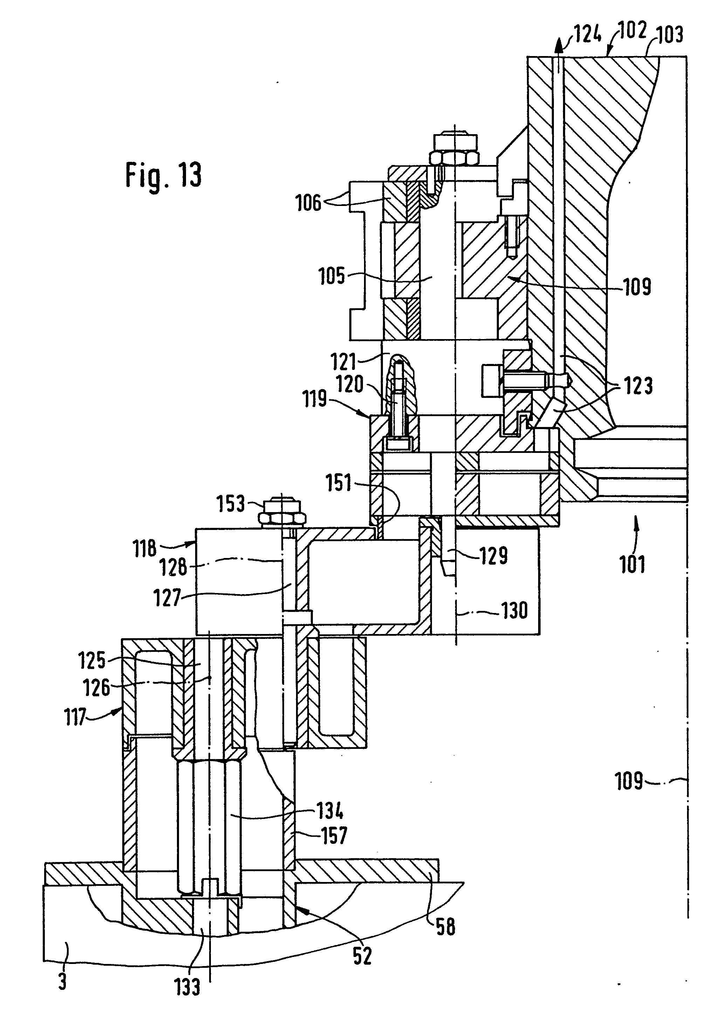

In Fig. 13 finden dagegen Fertigformhälften 103 geringerer axialer Länge Verwendung. Da zweckmäßigerweise der Einsatz 52 mit seinem Flansch 58 seine Höhenlage bei diesem Formenwechsel nicht verändern soll, wird der Winkelring 138 gemäß Fig. 12 aus seinem Sitz in dem Flansch 58 entfernt und durch ein rohrförmiges Verlängerungsstück 157 ersetzt. Es wird außerdem gemäß Fig. 13 eine im Bereich der Mutter 134 axial verlängerte zweite Schwenkachse 125 eingebaut, so daß das System aus den Teilen 117, 118 und 119 auf das neue Anschlußniveau an die kürzeren Fertigformhälften 103 angehoben ist.

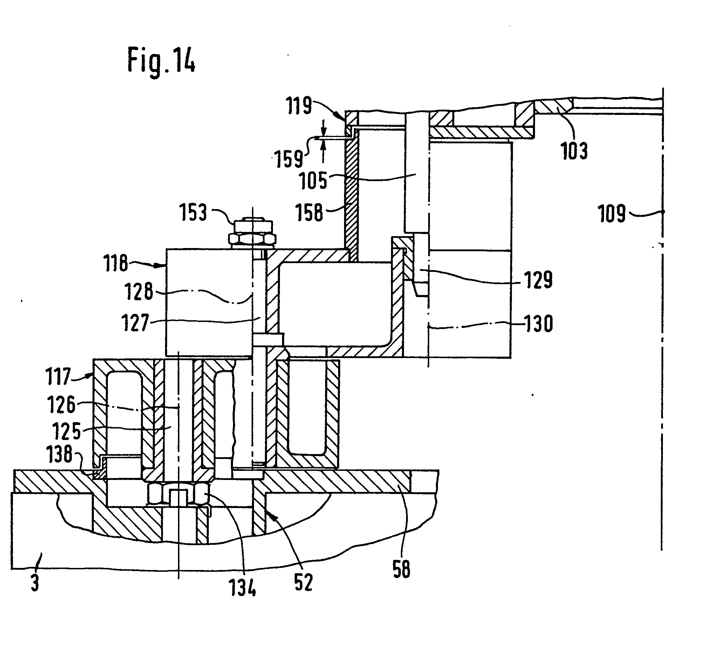

In Fig. 14 finden die gleichen Fertigformhälften 103 wie in Fig. 13 Verwendung. Da in diesem Fall das erste Gelenkkanalteil 117 und das zweite Gelenkkanalteil 118 in ihrer Anordnung gemäß Fig. 12 verbleiben sollen, ist der Zwischenraum zwischen dem zweiten Gelenkkanalteil 118 und dem Fluidverteilerkasten 119 durch ein rohrförmiges Verlängerungsstück 158 überbrückt, nachdem das Rohrstück 151 aus dem Fluidverteilerkasten 119 entfernt wurde. Das Verlängerungsstück 158 ist mit leichtem Preßsitz in dem zweiten Gelenkkanalteil 118 festgelegt und bildet oben mit dem Fluidverteilerkasten 119 einen kleinen Spalt 159. Alternativ könnte das Verlängerungsstück 158 auch anstelle des Rohrstückes 151 an dem Fluidverteilerkasten 119 festgelegt sein und mit dem zweiten Gelenkkanalteil 118 einen dem Spalt 152 in Fig. 12 entsprechenden Spalt bilden. In Fig. 14 ist der Wippenbolzen 105 um die wirksame Länge des Verlängerungsstückes 158 nach unten hin verlängert.

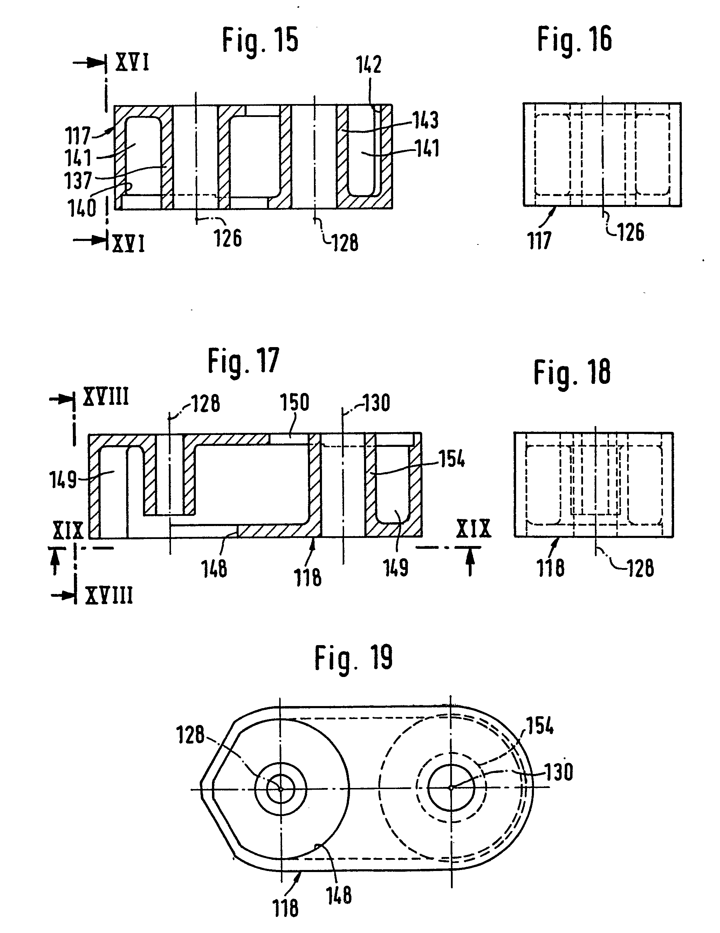

Die Fig. 15 und 16 zeigen weitere Einzelheiten des ersten Gelenkkanalteils 117.

Die Fig. 17 bis 19 zeigen weitere Einzelheiten des zweiten Gelenkkanalteils 118.

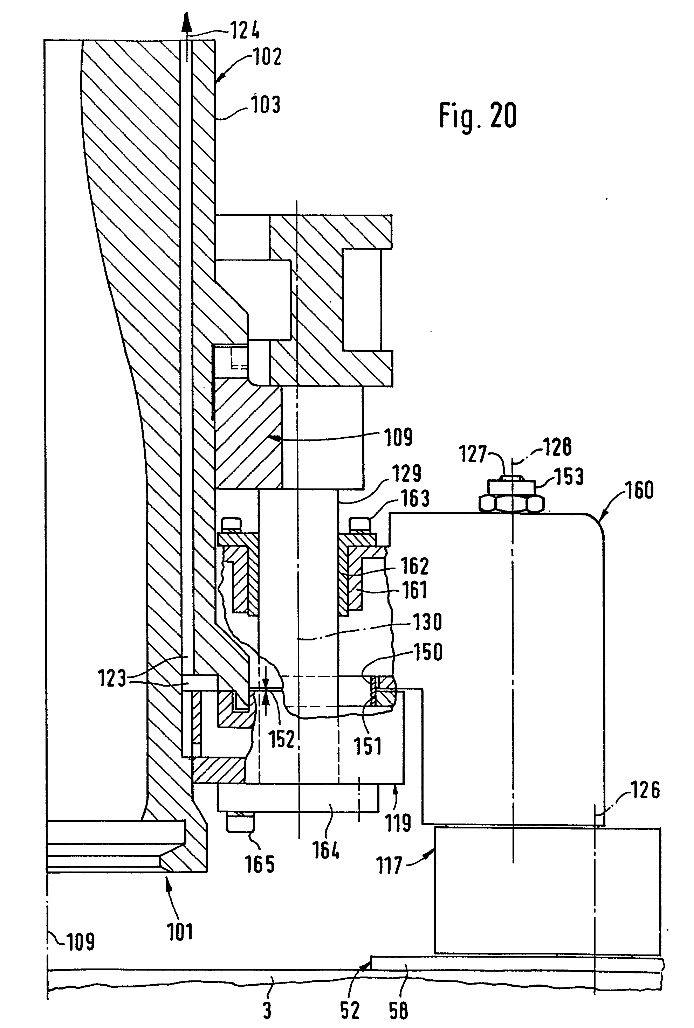

Fig. 20 zeigt eine Fertigformhälfte 103 von im Vergleich mit der Fertigformhälfte 103 in Fig. 12 größerer axialer Länge. In diesem Fall gelangt das Fluid von dem ersten Gelenkkanalteil 117 in ein besonderes, im wesentlichen L-förmiges zweites Gelenkkanalteil 160, das das Fluid im Gegensatz zu Fig. 12 von oben in den Fluidverteilerkasten 119 einspeist. Das zweite Gelenkkanalteil weist einen hohlzylindrischen Steg 161 auf, in dem eine an der vierten Schwenkachse 129 gelagerte Buchse 162 durch Schrauben 163 befestigt ist. Die vierte Schwenkachse 129 erstreckt sich nach unten durch den Fluidverteilerkasten 119 hindurch und ist an ihrem unteren Ende mit einem Flansch 164 versehen, auf dessen Oberseite sich der Fluidverteilerkasten 119, durch Schrauben 165 gehalten, abstützt.

**Ansprüche**

1. Kühlvorrichtung für ein durch ein Druckfluid, insbesondere Luft, kühlbares Formwerkzeug (21 ; 101) einer Maschine zur Verarbeitung thermoplastischer Stoffe, insbesondere schmelzflüssigen Glases, mit wenigstens einem raumfesten Zuführkanal (36 ; 116) für das Fluid und mit einem jeden Zuführkanal (36 ; 116) mit einer Fluidverteilvorrichtung (44 ; 119) für das relativ zu dem Zuführkanal (36 ; 116) um eine erste Schwenkachse (4 ; 108) schwenkbare Formwerkzeug (21 ; 101) verbindenden, relativ zu dem Zuführkanal (36 ; 116) und relativ zu der Fluidverteilvorrichtung (44 ; 119) schwenkbaren, geteilten Verbindungskanal (47 ; 131), dadurch gekennzeichnet, daß jeder Verbindungskanal (47 ; 131) wenigstens zwei Gelenkkanalteile (35, 41 ; 117, 118 ; 117, 160) aufweist, die relativ zueinander um eine zu der ersten Schwenkachse (4 ; 108) parallele Schwenkachse (39 ; 127) schwenkbar sind.

2. Kühlvorrichtung nach Anspruch 1, dadurch gekennzeichnet, daß ein erstes Gelenkkanalteil (35 ; 117) um eine zu der ersten Schwenkachse (4 ; 108) parallele, maschinenfeste zweite Schwenkachse (33 ; 125) schwenkbar ist, daß ein zweites Gelenkkanalteil (41 ; 118 ; 160) um eine zu der ersten (4 ; 108) und zweiten (33 ; 125) Schwenkachse parallele, an dem ersten (35 ; 117) oder an dem zweiten (41 ; 118 ; 160) Gelenkkanalteil befestigte dritte Schwenkachse (39 ; 127) schwenkbar ist, und daß das zweite Gelenkkanalteil (41 ; 118 ; 160) außerdem um eine zu der ersten (4 ; 108), zweiten (33 ; 125) und dritten (39 ; 127) Schwenkachse parallele, relativ zu der Fluidverteilvorrichtung (44 ; 119) feste vierte Schwenkachse (45 ; 129) schwenkbar ist.

3. Kühlvorrichtung nach Anspruch 1 oder 2, dadurch gekennzeichnet, daß bei Benutzung eines gasförmigen Fluids die Gelenkkanalteile (35, 41 ; 117, 118 ; 117, 160) gegenüber einander sowie gegenüber dem Zuführkanal (36 ; 116) und der Fluidverteilvorrichtung (44 ; 119) jeweils durch eine Spaltdichtung (64, 72, 76, 82, 83 ; 139, 147, 152 ; 159) abgedichtet sind.

4. Kühlvorrichtung nach einem der Ansprüche 1 bis 3, dadurch gekennzeichnet, daß zwischen jedem Zuführkanal (36 ; 116) und dem benachbarten Gelenkkanalteil (35 ; 117) ein Verlängerungsstück (157) wählbarer Länge einsetzbar ist.

5. Kühlvorrichtung nach einem der Ansprüche 1 bis 4, dadurch gekennzeichnet, daß zwischen jeder Fluidverteilvorrichtung (44 ; 119) und dem benachbarten Gelenkkanalteil (41 ; 118) ein Verlängerungsstück (158) wählbarer Länge einsetzbar ist.

6. Kühlvorrichtung nach einem der Ansprüche 2 bis 5, dadurch gekennzeichnet, daß eine die Längsachsen (34, 40 ; 126, 128) der zweiten (33 ; 125) und dritten (39 ; 127) Schwenkachse schneidende Ebene stets einen Winkel mit einer die Längsachsen (40, 46 ; 128, 130) der dritten (39 ; 127) und vierten (45 ; 129) Schwenkachse schneidenden Ebene einschließt, der kleiner als 180° ist und Null sein kann.

7. Kühlvorrichtung nach Anspruch 6, dadurch gekennzeichnet, daß die Längsachse (128) der dritten Schwenkachse (127) sich stets — gesehen von der ersten Schwenkachse (108) aus — jenseits einer Schwenkbahn der Längsachse (130) der vierten Schwenkachse (129) befindet.

8. Kühlvorrichtung nach Anspruch 7, dadurch gekennzeichnet, daß die Längsachse (126) der zweiten Schwenkachse (125) sich ebenfalls jenseits der Schwenkbahn der Längsachse (130) der vierten Schwenkachse (129) befindet.

9. Kühlvorrichtung nach Anspruch 6, dadurch gekennzeichnet, daß die Längsachse (40) der dritten Schwenkachse (39) sich stets — gesehen von der ersten Schwenkachse (4) aus — diesseits einer Schwenkbahn der Längsachse (46) der vierten Schwenkachse (45) befindet.

10. Kühlvorrichtung nach Anspruch 9, dadurch gekennzeichnet, daß die Längsachse (34) der zweiten Schwenkachse (33) sich ebenfalls diesseits der Schwenkbahn der Längsachse (46) der vierten Schwenkachse (45) befindet.

11. Kühlvorrichtung nach einem der Ansprüche 2 bis 10, dadurch gekennzeichnet, daß das erste Gelenkkanalteil (35) eine sich auf einem Kreisringstück um die zweite Schwenkachse (33) erstreckende, ständig mit dem Zuführkanal (36) verbundene Einlaßöffnung (37) für das Fluid und eine mit der dritten Schwenkachse (39) konzentrische, mit der Einlaßöffnung (37) in Verbindung stehende Auslaßöffnung (66) aufweist.

12. Kühlvorrichtung nach einem der Ansprüche 2 bis 10, dadurch gekennzeichnet, daß das erste Gelenkkanalteil (117) eine zu der zweiten Schwenkachse (125) konzentrische, ständig mit dem Zuführkanal (116) verbundene Einlaßöffnung (140) für das Fluid und eine mit der dritten Schwenkachse (127) konzentrische, mit der Einlaßöffnung (140) in Verbindung stehende Auslaßöffnung (142) aufweist.

13. Kühlvorrichtung nach Anspruch 11 oder 12, dadurch gekennzeichnet, daß das zweite Gelenkkanalteil (41 ; 118 ; 160) eine mit der Auslaßöffnung (66 ; 142) des ersten Gelenkkanalteils (35 ; 117) koaxiale Einlaßöffnung (73 ; 148) und eine mit der vierten Schwenkachse (45 ; 129) konzentrische, mit einer Einlaßöffnung (81) der Fluidverteilvorrichtung (44 ; 119) koaxiale und verbundene, mit der Einlaßöffnung (73 ; 148) in Verbindung stehende Auslaßöffnung (79 ; 150) aufweist.

## Claims

1. Cooling arrangement for a forming tool (21 ; 101) coolable by means of a pressurised fluid, especially air, in a machine for processing thermoplastic materials, especially molten glass, with at least one spatially-fixed supply conduit (36 ; 116) for the fluid and with a divided connecting conduit (47 ; 131), which connects each supply conduit (36 ; 116) with a fluid distributing device (44 ; 119) for the forming tool (21 ; 101), the connecting conduit (47 ; 131) being pivotable relative to the supply conduit (36 ; 116) and relative to the fluid distributing device (44 ; 119), and the forming tool (21 ; 101) being pivotable relative to the supply conduit (36 ; 116) about a first pivot spindle (4 ; 108), characterised in that each connecting conduit (47 ; 131) comprises at least two linked conduit parts (35, 41 ; 117, 118 ; 117, 160), which are pivotable relative to one another about a pivot spindle (39 ; 127) parallel to the first pivot spindle (4 ; 108).

2. Cooling arrangement according to claim 1, characterised in that a first linked conduit part (35 ; 117) is pivotable about a second pivot spindle (33 ; 125) fixed in relation to the machine and parallel to the first pivot spindle (4 ; 108), that a second linked conduit part (41 ; 118 ; 160) is pivotable about a third pivot spindle (39 ; 127) secured to the first (35 ; 117) or to the second (41 ; 118 ; 160) linked conduit part and parallel to the first (4 ; 108) and the second (33 ; 125) pivot spindles, and that the second linked conduit part (41 ; 118 ; 160) is also pivotable about a fourth pivot spindle (45 ; 129), fixed relative to the fluid distributing device (44 ; 119) and parallel to the first (4 ; 108), second (33 ; 125) and third (39 ; 127) pivot spindles.

3. Cooling arrangement according to claim 1 or 2, characterised in that when using a gaseous fluid, the linked conduit parts (35, 41 ; 117, 118 ; 117, 160) are respectively sealed relative to one another, as well as relative to the supply conduit (36 ; 116) and the fluid distributing device (44 ; 119), by a sealing gap (64, 72, 76, 82, 83 ; 139, 147, 152 ; 159).

4. Cooling arrangement according to any of claims 1 to 3, characterised in that an extension member (157) of selectable length is insertable between each supply conduit (36 ; 116) and the adjacent linked conduit part (35 ; 117).

5. Cooling arrangement according to any of claims 1 to 4, characterised in that an extension member (158) of selectable length is insertable between each fluid distributing device (44 ; 119) and the adjacent linked conduit part (41 ; 118).

6. Cooling arrangement according to any of claims 2 to 5, characterised in that a plane intersecting the longitudinal axes (34, 40 ; 126, 128) of the second (33 ; 125) and third (39 ; 127) pivot spindles always makes an included angle with a plane intersecting the longitudinal axes (40, 46 ; 128, 130) of the third (39 ; 127) and fourth (45 ; 129) pivot spindles, which is smaller than 180° and can be zero.

7. Cooling arrangement according to claim 6, characterised in that the longitudinal axis (128) of the third pivot spindle (127) is always located — as viewed from the first pivot spindle (108) — on the other side of a pivot path of the longitudinal axis (130) of the fourth pivot spindle (129).

8. Cooling arrangement according to claim 7, characterised in that the longitudinal axis (126) of the second pivot spindle (125) is also located on the other side of the pivot path of the longitudinal axis (130) of the fourth pivot spindle (129).

9. Cooling arrangement according to claim 6, characterised in that the longitudinal axis (40) of the third pivot spindle (39) is always located — as viewed from the first pivot spindle (4) — on the same side of a pivot path of the longitudinal axis (46) of the fourth pivot spindle (45).

10. Cooling arrangement according to claim 9, characterised in that the longitudinal axis (34) of the second pivot spindle (33) is also located on the same side of the pivot path of the longitudinal axis (46) of the fourth pivot spindle (45).

11. Cooling arrangement according to any of claims 2 to 10, characterised in that the first linked conduit part (35) comprises an inlet opening (37) for the fluid, extending in an arc about the second pivot spindle (33) and permanently connected with the supply conduit (36), and an outlet opening (66) concentric with the third pivot spindle (39) and connected to the inlet opening (37).

12. Cooling arrangement according to any of claims 2 to 10, characterised in that the first linked conduit part (117) comprises an inlet opening (140) for the fluid, concentric with the second pivot spindle (125) and permanently connected with the supply conduit (116), and an outlet opening (142) concentric with the third pivot spindle (127) and connected to the inlet opening (140).

13. Cooling arrangement according to claim 11 or 12, characterised in that the second linked conduit part (41 ; 118 ; 160) comprises an inlet opening (73 ; 148) coaxial with the outlet opening (66 ; 142) of the first linked conduit part (35 ; 117) and an outlet opening (79 ; 150) concentric with the fourth pivot spindle (45 ; 129), coaxial with and connected to an inlet opening (81) of the fluid distributing device (44 ; 119) and connected to the inlet opening (73 ; 148).

## Revendications

1. Dispositif de refroidissement pour un outil de moulage (21 ; 101) pouvant être refroidi par un fluide sous pression, notamment par de l'air et qui appartient à une machine pour le travail des matières thermoplastiques, en particulier du verre fondu, ce dispositif comprenant au moins un canal d'amenée (36 ; 116) fixe dans l'espace, pour l'acheminement du fluide, et un canal de liaison (47 ; 131) en plusieurs parties, qui relie chaque canal d'amenée (36 ; 116) à un dispositif de distribution du fluide (44 ; 119) affecté à l'outil de moulage (21 ; 101), lequel peut pivoter par rapport au canal d'amenée (36 ; 116) autour d'un premier pivot (4 ; 108), le canal de liaison pouvant pivoter par rapport au canal d'amenée (36 ; 116) et par rapport au dispositif de distribution du fluide (44 ; 119), caractérisé par le fait que chaque canal de liaison (47 ; 131) comprend au moins deux parties de canal articulé (35, 41 ; 117, 118 ; 117, 160), qui peuvent pivoter l'une par rapport à l'autre autour d'un pivot (39 ; 127) parallèle au premier pivot (4 ; 108).

2. Dispositif de refroidissement selon la revendication 1, caractérisé par le fait qu'une première partie (35 ; 117) du canal articulé peut pivoter autour d'un deuxième pivot (33 ; 125) solidaire de la machine et parallèle au premier pivot (4 ; 108), qu'une deuxième partie (41 ; 118 ; 160) du canal articulé peut pivoter autour d'un troisième pivot (39 ; 127), fixé à la première partie (35 ; 117) ou à la deuxième partie (41 ; 118 ; 160) du canal articulé et parallèle au premier pivot (4 ; 108) et au deuxième pivot (35 ; 125), et que la deuxième partie (41 ; 118 ; 160) du canal articulé peut par ailleurs pivoter autour d'un quatrième pivot (45 ; 129) fixe par rapport au dispositif de distribution de fluide (44 ; 119) et parallèle au premier pivot (4 ; 108), au deuxième pivot (33 ; 125) et au troisième pivot (39 ; 127).

3. Dispositif de refroidissement selon la revendication 1 ou 2, caractérisé par le fait que, dans le cas de l'utilisation d'un fluide gazeux, les parties du canal articulé (35, 41 ; 117, 118 ; 117, 160) sont étanchées l'une par rapport à l'autre ainsi que par rapport au canal d'amenée (36 ; 116) et au dispositif (44 ; 119) de distribution du fluide, dans chaque cas par une garniture d'étanchéité de fente (62, 72, 76, 82, 83 ; 139, 147, 152 ; 159).

4. Dispositif de refroidissement selon l'une des revendications 1 à 3, caractérisé par le fait qu'entre chaque canal d'amenée (36 ; 116) et la partie voisine (35 ; 117) du canal articulé, peut être intercalé un prolongateur (157) d'une longueur pouvant être choisie.

5. Dispositif de refroidissement selon l'une des revendications 1 à 4, caractérisé par le fait qu'entre chaque dispositif de distribution de fluide (44 ; 119) et la partie voisine (41 ; 118) du canal articulé, peut être intercalé un prolongateur (158) d'une longueur pouvant être choisie.

6. Dispositif de refroidissement selon l'une des revendications 2 à 5, caractérisé par le fait qu'un plan qui coupe les axes longitudinaux (34, 40 ; 126, 128) du deuxième pivot (33 ; 125) et du troisième pivot (39 ; 127) forme toujours avec un plan qui coupe les axes longitudinaux (40, 46 ; 128, 130) du troisième pivot (39 ; 127) et du quatrième pivot (45 ; 129), un angle qui est plus petit que 180° et peut être nul.

7. Dispositif de refroidissement selon la revendication 6, caractérisé par le fait que l'axe longitudinal (128) du troisième pivot (127) se trouve toujours — vu du premier pivot (108) — au-delà de la trajectoire de pivotement de l'axe longitudinal (130) du quatrième pivot (129).

8. Dispositif de refroidissement selon la revendication 7, caractérisé par le fait que l'axe longitudinal (126) du deuxième pivot (125) se trouve également au-delà de la trajectoire de pivotement de l'axe longitudinal (130) du quatrième pivot (129).

9. Dispositif de refroidissement selon la revendication 6, caractérisé par le fait que l'axe longitudinal (40) du troisième pivot (39) se trouve toujours — vu du premier pivot (4) — en-deçà de la trajectoire de pivotement de l'axe longitudinal (46) du quatrième pivot (45).

10. Dispositif de refroidissement selon la revendication 9, caractérisé par le fait que l'axe longitudinal (34) du deuxième pivot (33) se trouve également en-deçà de la trajectoire du pivotement de l'axe longitudinal (46) du quatrième pivot (45).

11. Dispositif de refroidissement selon l'une quelconque des revendications 2 à 10, caractérisé par le fait que la première partie (35) du canal articulé présente une ouverture d'entrée (37) pour le fluide qui s'étend sur un segment de couronne de cercle autour du deuxième pivot (33) et qui est constamment reliée au canal d'amenée (36), et une ouverture de sortie (66) concentrique au troisième pivot (39) et qui est en communication avec l'ouverture d'entrée (37).

12. Dispositif de refroidissement selon l'une des revendications 2 à 10, caractérisé par le fait que la première partie (117) du canal articulé présente une ouverture d'entrée (140) pour le fluide, concentrique au deuxième pivot (125) et constamment reliée au canal d'amenée (116), et une ouverture de sortie (142) concentrique au troisième pivot (127) et en communication avec l'ouverture d'entrée (140).

13. Dispositif de refroidissement selon la revendication 11 ou 12, caractérisé par le fait que la deuxième partie (41 ; 118 ; 160) du canal articulé présente une ouverture d'entrée (73 ; 148) coaxiale à l'ouverture de sortie (66 ; 142) de la première partie (35 ; 117) du canal articulé, et une ouverture de sortie (79 ; 150), concentrique au quatrième pivot (45 ; 129), coaxiale et reliée à une ouverture d'entrée (81) du dispositif de distribution du fluide (44 ; 119), et en communication

Fig. 1

# Fig. 2

Fig. 3

0 052 223

Fig. 4

Fig. 5

Fig. 6

Fig. 7

Fig. 8

Fig. 9

Fig. 10

Fig. 11

0 052 223

**Fig.12**

Fig. 13

# Fig.14

## Fig. 15

117
141
137
140

142
143
141

126
128

## Fig. 16

117
126

## Fig. 17

128
150
130
154
149
148
118
149

## Fig. 18

118
128

## Fig. 19

128
154
130
148
118

9

Fig. 20